# EUROPÄISCHE PATENTSCHRIFT

(11) **EP 2 964 550 B1**
(45) Veröffentlichungstag und Bekanntmachung des Hinweises auf die Patenterteilung: **24.05.2017**
(21) Anmeldenummer: 14704168.5
(22) Anmeldetag: 13.02.2014
(51) Int. Cl.: B65G 21/20

(54) **VORRICHTUNG ZUR POSITIONIERUNG UND/ODER AUSRICHTUNG EIN ODER MEHRERER VERSTELLBARER LEITKOMPONENTEN ZUR FÜHRUNG VON ARTIKELN IN EINEM TRANSPORTSYSTEM**
DEVICE FOR POSITIONING AND/OR ORIENTING ONE OR MORE ADJUSTABLE DIRECTING COMPONENTS FOR GUIDING ARTICLES IN A TRANSPORT SYSTEM
DISPOSITIF DE POSITIONNEMENT ET/OU D'ORIENTATION D'UN OU PLUSIEURS COMPOSANTS DÉFLECTEURS RÉGLABLES SERVANT À DIRIGER ET/OU GUIDER DES ARTICLES DANS UN SYSTÈME DE TRANSPORT

(30) Priorität: 06.03.2013 DE 102013102202
(43) Veröffentlichungstag der Anmeldung: 13.01.2016
(73) Patentinhaber: KRONES Aktiengesellschaft, 93073 Neutraubling (DE)
(72) Erfinder: NAPRAVNIK, Christian, 93073 Neutraubling (DE)
(74) Vertreter: Benninger, Johannes
(86) Internationale Anmeldenummer: PCT/EP2014/052846
(87) Internationale Veröffentlichungsnummer: WO 2014/135352

(56) Entgegenhaltungen:
- WO-A1-2011/145123
- WO-A1-2012/090079
- DE-U1- 29 617 148
- JP-A- S5 957 812

## Beschreibung

Die vorliegende Erfindung betrifft eine Vorrichtung zur Positionierung ein oder mehrerer verstellbarer Leitkomponenten in einem Transportsystem.

Aus dem Stand der Technik bekannte Transportsysteme verfügen zumeist über seitliche Führungselemente, wie Geländer oder dergleichen, deren Abstand oder deren Ausrichtung in Abhängigkeit von der Geometrie der zu transportierenden Artikel angepasst werden muss. Eine derartige Anpassung erfolgte in der Regel manuell und ggf. unter Zuhilfenahme von Werkzeug.

Da eine derartige manuelle Anpassung mit hohem zeitlichem Aufwand verbunden ist und die Produktion bzw. der Transport während der Anpassung gestoppt werden muss, sind aus dem Stand der Technik weitere Vorrichtungen bekannt, welche eine Anpassung des Abstandes von Geländern in einem Transportsystem unter Zuhilfenahme eines Motors ermöglichen.

Eine derartige Vorrichtung ist beispielsweise aus der WO 03/099687 A1 bekannt. Bei dem in der WO-Offenlegungsschrift gezeigten Transportsystem sind erste Führungsgeländer mit einem Motor gekoppelt. Zudem sind in einem nachgeordneten Bereich weitere Führungsgeländer vorhanden, welche über eine Handkurbel synchron und in gleichem Abstand zueinander verstellbar sind. Sowohl für die ersten Führungsgeländer als auch für die nachfolgenden Führungsgeländer muss jeweils ein Motor oder eine Handkurbeln betätigt werden, um die gesamte Transportstrecke an neue Behältergrößen anzupassen.WO 2011/145123 A1 beschreibt eine gattungsgemäße Vorrichtung. Aufgabe der Erfindung ist, eine Vorrichtung zur Verfügung zu stellen, welche die Verstellung mehrerer Leitkomponenten eines Transportsystems in Anpassung an die Geometrie unterschiedlicher Artikel auf vereinfachte Art und Weise und unter reduziertem Aufwand ermöglicht.

Die obige Aufgabe wird durch eine Vorrichtung gelöst, welche die Merkmale in dem Patentanspruch 1 umfasst. Weitere vorteilhafte Ausgestaltungen werden durch die Unteransprüche beschrieben.

Die erfindungsgemäße Vorrichtung ist vorgesehen zur Positionierung und/oder zur Ausrichtung ein oder mehrerer verstellbarer Leitkomponenten zur Lenkung oder Führung von Artikeln in einem Transportsystem. Beispielsweise kann die Vorrichtung zur relativen Abstandsvergrößerung und relativen Abstandsverminderung wenigstens zweier erster und wenigstens zweier zweiter Leitkomponenten ausgebildet sein. Die wenigstens zwei ersten Leitkomponenten können im Verlauf einer Transportstrecke den wenigstens zwei zweiten Leitkomponenten vorgeordnet oder nachgeordnet sein. Artikel können in einem ersten Abschnitt der Transportstrecke über die wenigstens zwei ersten Leitkomponenten gelenkt oder geführt werden und in einem weiteren Abschnitt der Transportstrecke über die wenigstens zwei weiteren Leitkomponenten gelenkt oder geführt werden.

In bevorzugten Ausführungsformen sind mehrere weitere Leitkomponenten vorhanden, die sich über den gesamten Verlauf der Transportstrecke erstrecken und die Artikel über den gesamten Verlauf der Transportstrecke lenken oder führen.

In weiteren Ausführungsformen ist vorstellbar, dass über die Vorrichtung ein Ausrichten bzw. Verschwenken mehrerer Leitkomponenten bewirkbar ist. Hierbei kann es sein, dass ein Winkel, welchen ein oder mehrere der Leitkomponenten zusammen mit einer Transportebene einschließen, selektiv über die Vorrichtung verstellbar ist. Auch kann es sein, dass zusätzlich oder alternativ eine vertikale Positionierung ein oder mehrerer Leitkomponenten über die Vorrichtung bewirkbar ist.

Für den Fachmann ist klar, dass in diversen Ausführungsbeispielen der erfindungsgemäßen Vorrichtung sowohl eine vertikale Positionierung ein oder mehrerer Leitkomponenten als auch eine relative Abstandsvergrößerung und/oder Abstandsminderung ein oder mehrerer Leitkomponenten erfolgen kann. Auf derartige Möglichkeiten wird nachfolgend noch weiter eingegangen werden.

Die Artikel können beispielsweise durch Behälter oder Flaschen ausgebildet sein und ggf. auf einer Horizontalfördereinrichtung zwischen den Leitkomponenten und entlang einer Transportstrecke gelenkt und/oder geführt werden. Vorstellbar ist hierbei, dass jeweils zwei erste Leitkomponenten, zwischen welchen die jeweiligen Artikel gelenkt oder geführt werden, zumindest abschnittsweise parallel zueinander orientiert sind. Vorstellbar ist auch, dass die Artikel in einem ersten Abschnitt über wenigstens zwei erste Leitkomponenten geradlinig gelenkt und/oder geführt werden und dass die Artikel in einem weiteren Abschnitt über wenigstens zwei zweite Leitkomponenten kurvenförmig gelenkt und/oder geführt werden. Hierbei kann es sein, dass der relative Abstand der wenigstens zwei ersten Leitkomponenten und der relative Abstand der wenigstens zwei zweiten Leitkomponenten mittels der erfindungsgemäßen Vorrichtung unabhängig voneinander vorgebbar sind.

Auch kann es sein, dass die vertikale Positionierung ein oder mehrerer erster Leitkomponenten und die vertikale Positionierung ein oder mehrerer zweiter und/oder ein oder mehrerer weiterer Leitkomponenten unabhängig voneinander mittels einer Ausführungsform der erfindungsgemäßen Vorrichtung definiert vorgebbar ist.

Der relative Abstand zwischen den jeweiligen Leitkomponenten sollte bevorzugt derart gewählt werden, dass die Artikel während des Lenkens und/oder Führens durch die Leitkomponenten gestützt werden und ein Kippen der Artikel während des Lenkens und/oder Führens mittels der Leitkomponenten zumindest weitgehend ausgeschlossen werden kann.

Die Vorrichtung kann vorgesehen sein zur Ausrichtung und/oder Positionierung ein oder mehrerer verstellbarer Leitkomponenten in einem Transportsystem als Bestandteil einer Verpackungseinrichtung für Artikel und/oder ein oder mehrerer verstellbarer Leitkomponenten in einem Transportsystem als Bestandteil einer Befüllungseinrichtung für als Behälter ausgebildete Artikel mit flüssigem Medium. Ist das Transportsystem als Bestandteil einer Verpackungseinrichtung ausgebildet, so kann vorgesehen sein, dass die jeweiligen mittels des Transportsystems transportierten Artikel während ihres Transportes mit Verpackungsmaterial beaufschlagt werden. Die Verwendung des Transportsystems ist nicht auf derartige Einrichtungen beschränkt, so dass der angesprochene Fachmann das Transportsystem für weitere Einrichtungen verwenden kann.

Erfindungsgemäß sind ein oder mehrere Leitkomponenten an mindestens einen ersten Abtrieb einer Getriebeanordnung gekoppelt und über den mindestens einen ersten Abtrieb positionier- und/oder ausrichtbar. Es kann hierbei sein, dass der mindestens eine erste Abtrieb über ein oder mehrerer flexible Zugelemente und insbesondere über einen Bowdenzug, einen Seilzug oder dergleichen mit den ein oder mehreren Leitkomponenten gekoppelt ist.

Wie vorhergehend erwähnt, kann es sein, dass mittels des mindestens einen ersten Abtriebs die relative Beabstandung wenigstens zweier Leitkomponenten definiert vorgebbar ist. Beispielsweise können zur relativen Beabstandung beide Leitkomponenten mit dem jeweiligen Abtrieb gekoppelt sein, vorstellbar ist jedoch auch, dass zur relativen Abstandsvergrößerung oder Abstandsminderung lediglich eine der beiden Leitkomponenten mit dem jeweiligen Abtrieb gekoppelt ist.

Weiterhin kann es alternativ oder ergänzend sein, dass mittels des mindestens einen ersten Abtriebs eine vertikale Positionierung der an den mindestens einen ersten Abtrieb gekoppelten ein oder mehreren Leitkomponenten definiert vorgebbar ist. Beispielsweise kann eine Leitkomponente an einen ersten Abtrieb zur relativen Beabstandung zu wenigstens einer weiteren Leitkomponente gekoppelt sein, wobei die gleiche Leitkomponente an wenigstens einen zweiten Abtrieb zu ihrer vertikalen Positionierung gekoppelt ist. Denkbar ist jedoch auch, dass eine Leitkomponente über wenigstens zwei Kopplungsmittel mit einem ersten Abtrieb für eine relative Beabstandung zu einer weiteren Leitkomponente und ihre ergänzende vertikale Positionierung gekoppelt ist. Bei mechanischer Wirkverbindung des einen Abtriebs mit einem nachfolgend noch näher beschriebenen Stellaktor kann bei derartiger Ausführungsform eine relative Beabstandung der einen Leitkomponente zu einer weiteren Leitkomponente sowie ihre vertikale Positionierung über den einen Abtrieb und unter Wirkverbindung mit den Stellaktor zeitsynchron erfolgen.

Zudem ist vorgesehen, dass ein oder mehrere weitere Leitkomponenten an mindestens einen zweiten Abtrieb der Getriebeanordnung gekoppelt und über den mindestens einen zweiten Abtrieb positionier- und/oder ausrichtbar sind. Auch hier kann es sein, dass die Koppelung des mindestens einen zweiten Abtriebs mit den ein oder mehreren Leitkomponenten über einen mit dem mindestens einen zweiten Abtrieb und mit der oder den Leitkomponenten verbundenen Seilzug und/oder über einen mit dem mindestens einen zweiten Abtrieb und mit der oder den Leitkomponenten verbundenen Bowdenzug erfolgt. Es kann weiterhin sein, dass mittels des mindestens einen zweiten Abtriebs die Beabstandung der an den mindestens einen zweiten Abtrieb gekoppelten ein oder mehreren Leitkomponenten zu weiteren Leitkomponenten definiert vorgebbar ist. Auch kann es alternativ oder ergänzend sein, dass mittels des mindestens einen zweiten Abtriebs eine vertikale Positionierung der an den mindestens einen zweiten Abtrieb gekoppelten ein oder mehreren Leitkomponenten definiert vorgebbar ist.

In bevorzugten Ausführungsformen sind darüber hinaus mindestens ein dritter und/oder mehrere weitere Abtriebe vorhanden, die jeweils mit ein oder mehreren weiteren Leitkomponenten gekoppelt sind, wobei über den jeweiligen Abtrieb die an den jeweiligen Abtrieb gekoppelten Leitkomponenten positionier- und/oder ausrichtbar sind.

Weiter kann es sein, dass wenigstens zwei Abtriebe, vorzugsweise jedoch sämtliche Abtriebe der Vorrichtung, benachbart zueinander angeordnet und zur unabhängigen Rotationsbewegung direkt über ein oder mehrere Axiallager mit ihrem jeweiligen benachbarten Abtrieb in Verbindung gebracht sind. Ein erster vorderer Abtrieb kann hierbei weiter über ein oder mehrerer Axiallager mit einem Gehäuse der Vorrichtung in Verbindung stehen. Ein hinterer Abtrieb kann zudem über ein oder mehrerer weitere Axiallager mit einem Gehäuse der Vorrichtung in Verbindung stehen.

Weiter ist vorgesehen, dass die Vorrichtung einen Stellaktor umfasst, der selektiv mit dem mindestens einen ersten Abtrieb und/oder mit dem mindestens einen zweiten Abtrieb und/oder mit ein oder mehreren weiteren Abtrieben zur Ausrichtung und/oder Positionierung der mit dem jeweiligen Abtrieb gekoppelten ein oder mehreren Leitkomponenten mechanisch in Wirkverbindung bringbar ist.

Die mechanische Wirkverbindung zwischen Stellaktor und dem jeweiligen Abtrieb kann darüber hinaus selektiv lösbar ausgebildet sein. Es kann hierbei vorgesehen sein, dass bei vorhandener mechanischer Wirkverbindung des Stellaktors mit dem jeweiligen Abtrieb eine mechanische Koppelung zwischen dem Stellaktor und dem jeweiligen Abtrieb vorhanden ist, während bei gelöster mechanischer Wirkverbindung zwischen dem Stellaktor und dem jeweiligen Abtrieb keine mechanische Koppelung zwischen dem Stellaktor und dem jeweiligen Abtrieb vorhanden ist. Sofern die mechanische Koppelung vorhanden ist, kann bei derartiger Ausführungsform über den Stellaktor eine Positionierung und/oder Ausrichtung der mit dem jeweiligen Abtrieb gekoppelten ein- oder mehreren Leitkomponenten erfolgen. Sofern keine mechanische Koppelung mit einem oder mehreren der Abtriebe vorhanden ist, kann selbst bei betätigtem Stellaktor keine Positionierung und/oder Ausrichtung der mit den ein oder mehreren Abtrieben gekoppelten ein oder mehreren Leitkomponenten erfolgen.

Vorstellbar ist zudem, dass bei mechanischer Wirkverbindung des Stellaktors mit dem wenigstens einem ersten Abtrieb zeitgleich eine mechanische Wirkverbindung des Stellaktors mit wenigstens einem weiteren Abtrieb herstellbar ist. Beispielsweise kann der Stellaktor hierbei über eine Antriebswelle zeitgleich mit wenigstens einem ersten Abtrieb und mindestens einem weiteren Abtrieb mechanisch gekoppelt sein, während der Stellaktor mit ein oder mehreren weiteren Abtrieben nicht mechanisch gekoppelt ist.

In weiteren Ausführungsformen kann es zudem sein, dass der Stellaktor mit lediglich jeweils einem Abtrieb mechanisch in Wirkverbindung bringbar ist. Es kann darüber hinaus in weiteren Ausführungsformen vorgesehen sein, dass bei mechanischer Wirkverbindung mit ein oder mehreren bestimmten Abtrieben zeitgleich eine mechanische Wirkverbindung mit ein oder mehreren weiteren definierten Abtrieben hergestellt ist, wobei bei mechanischer Wirkverbindung mit ein oder mehreren weiteren bestimmten Abtrieben zeitgleich keine mechanische Wirkverbindung mit weiteren Abtrieben hergestellt ist.

Demnach kann es sein, dass unter gleichzeitiger Wirkverbindung des Stellaktors mit dem wenigstens einem ersten Abtrieb und wenigstens einem weiteren Abtrieb über den Stellaktor die an den wenigstens einen ersten Abtrieb gekoppelten Leitkomponenten zeitsynchron mit den an den weiteren Abtrieb gekoppelten Leitkomponenten positionier- und/oder ausrichtbar sind.

Wird der Stellaktor nacheinander mit jeweils einem Abtrieb mechanisch in Wirkverbindung gebracht, so kann es sein, dass mittels der erfindungsgemäßen Vorrichtung die Ausrichtung und/oder Positionierung mehrerer Leitkomponenten nacheinander vornehmbar ist.

In einer bevorzugten Ausführungsform der vorliegenden Erfindung kann der Stellaktor über eine zentrale und über den Stellaktor rotationsbeweglich antreibbare Antriebswelle selektiv mit dem mindestens einen ersten Abtrieb und/oder mit dem mindestens einen zweiten Abtrieb mechanisch in Wirkverbindung bringbar sein. Die zentrale Antriebswelle kann um ihre Längsachse rotierbar über den Stellaktor antreibbar sein. Vorstellbar ist hierbei, dass die Wirkverbindung des Stellaktors mit dem jeweiligen Abtrieb durch Formschluss der Antriebswelle mit dem oder den jeweiligen Abtrieben und/oder durch Formschluss ein oder mehrerer auf der Antriebswelle aufsitzender Eingriffsmittel bzw. Antriebsmittel mit dem oder den jeweiligen Abtrieben herstellbar ist.

Wie vorhergehend erwähnt, kann in einer bevorzugten Ausführungsform die mechanische Wirkverbindung zwischen dem Stellaktor und dem jeweiligen mechanischen Abtrieb selektiv lösbar sein. Demnach kann der Formschluss zwischen der Antriebswelle und dem jeweiligen Abtrieb und/oder der Formschluss zwischen den ein oder mehreren auf der Antriebswelle aufsitzenden Eingriffsmittel und dem jeweiligen Abtrieb selektiv lösbar ausgebildet sein.

Weiter ist denkbar, dass die Antriebswelle oder der Stellaktor zusammen mit der Antriebswelle durch eine Verschiebung, welche im Wesentlichen in Richtung einer Längsachse der Antriebswelle gerichtet ist, selektiv mit dem mindestens einen ersten Abtrieb und/oder mit dem mindestens einen zweiten Abtrieb in Wirkverbindung bringbar ist. Ist der Stellaktor, wie vorhergehend beschrieben, durch Formschluss der Antriebswelle oder durch Formschluss ein oder mehrerer auf der Antriebswelle aufsitzender Eingriffsmittel mit dem jeweiligen Abtrieb in Wirkverbindung bringbar, so kann der Formschluss über eine Verschiebung der Antriebswelle oder eine Verschiebung der Antriebswelle zusammen mit ihren aufsitzenden Eingriffsmitteln herstellbar sein.

Beispielsweise kann der Stellaktor, ggf. zusammen mit der Antriebswelle, hierzu über geeignete Lager und vorzugsweise über Gleitlager mit einem Gehäuse der Vorrichtung in Verbindung stehen.

Auch kann die Antriebswelle oder der Stellaktor zusammen mit der Antriebswelle zu ihrer Verschiebung an einen relativ zu einem Gehäusebereich bewegbaren Führungsschlitten einer Linearführung gekoppelt sein. Bevorzugt kann die Antriebswelle über geeignete Lager bzw. Axiallager relativ zum Führungsschlitten drehbar mit dem Führungsschlitten in Verbindung gebracht sein.

In einer weiteren bevorzugten Ausführungsform ist denkbar, dass die Linearführung eine sich bereichsweise entlang der Antriebswelle erstreckende und zusammen mit der Antriebswelle verschiebbare Verzahnung umfasst, die nicht rotierbar ausgebildet ist und mit einem oder mehreren, vorzugsweise jedoch mit sämtlichen der Abtriebe, welche nicht mit dem Stellaktor mechanisch in Wirkverbindung gebracht sind, in Eingriff steht. Die Verzahnung kann hierbei als Blockiermittel ausgebildet sein und die jeweiligen Abtriebe, mit welchen sie in Eingriff gebracht ist, in ihrer jeweiligen Ist- Position nicht rotierbar fixieren. Ein unbeabsichtigtes Verstellen ein oder mehrerer Leitkomponenten über ihren jeweiligen Abtrieb kann hierbei vorteilhafterweise aufgrund des Eingriffs mit der Verzahnung ausgeschlossen werden. Vorstellbar ist auch, dass während eines Wechsels der mechanischen Wirkverbindung von einem ersten der Abtriebe zu einem zweiten der Abtriebe ein Eingriff der Verzahnung mit beiden der Abtriebe ausgebildet ist.

Wie nachfolgend noch weiter dargestellt wird, kann die Antriebswelle eine Außenverzahnung ausbilden und/oder ein oder mehrere Antriebsmittel mit Außenverzahnung können drehfest auf der Antriebswelle aufsitzen. Durch den Eingriff der nicht rotierbaren Verzahnung mit den jeweiligen Abtrieben und die Fixierung in ihrer jeweiligen Istposition kann die Antriebswelle zusammen mit ihrer Außenverzahnung bzw. die Antriebswelle und ihre aufsitzenden Antriebsmittel mit Außenverzahnung durch sämtliche Abtriebe ohne Rotation der Antriebswelle geführt werden.

Zudem ist denkbar, dass die Verschiebung der Antriebswelle, ggf. zusammen mit der vorherig erwähnten nicht rotierbaren Verzahnung, oder die Verschiebung des Stellaktors zusammen mit der Antriebswelle und ggf. der nicht rotierbaren Verzahnung mittels eines weiteren Aktors erfolgt. Der weitere Aktor kann hierbei ortsfest mit einem Gehäuse der Vorrichtung verbunden sein. Demnach kann über den weiteren Aktor eine Bewegung des Stellaktors oder des Stellaktors zusammen mit der Antriebswelle relativ zum Gehäuse der Vorrichtung und in Längsrichtung der Antriebswelle bewirkbar sein. In einer bevorzugten Ausführungsform können der weitere Aktor und/oder der Stellaktor als Servomotoren ausgebildet sein. Auch ist vorstellbar, dass der weitere Aktor und/oder der Stellaktor durch Schrittmotoren ausgebildet sind. Beispielsweise kann vorgesehen sein, dass sowohl der weitere Aktor als auch der Stellaktor durch jeweils einen Schrittmotor ausgebildet sind. Der weitere Aktor ist somit zur Vorgabe der selektiven Wirkverbindung des Stellaktors mit dem mindestens einem ersten Abtrieb und/oder mit dem mindestens einem zweiten Abtrieb vorgesehen.

Weiter können der mindestens eine erste Abtrieb und/oder der mindestens eine zweite Abtrieb und/oder weitere Abtriebe jeweils eine Aufnahme für die Antriebswelle ausbilden, durch welche Aufnahme die Antriebswelle bei Wirkverbindung mit dem jeweiligen Abtrieb ein- oder hindurchtritt. Der mindestens eine erste Abtrieb und der mindestens eine zweite Abtrieb und/oder ein oder mehrere weitere Abtriebe können derart angeordnet sein, dass deren Aufnahmen miteinander fluchten.

Die Antriebswelle kann bei dieser Ausführungsform in Längsrichtung durch die jeweiligen fluchtenden Aufnahmen der Abtriebe geführt werden. Ein oder mehrere der Abtriebe können jeweils als Abtriebswelle ausgebildet sein oder jeweils eine Abtriebswelle aufweisen. Die Abtriebswelle und die Antriebswelle ein oder mehrerer Abtriebe oder sämtlicher Abtriebe können bevorzugt ebenso miteinander fluchten.

Denkbar ist hierbei, dass die Antriebswelle zusammen mit jeweils einem Abtrieb jeweils ein Planetengetriebe bzw. jeweils ein Umlaufgetriebe bildet. Der Abtrieb kann somit eine Abtriebswelle aufweisen, wobei die Abtriebswelle und die Antriebswelle miteinander fluchten. Zwischen Antriebswelle und Abtriebswelle können mehrere weitere Räder zur Kraftübertragung von der Antriebswelle auf die Abtriebswelle und insbesondere Zahnräder angeordnet sein. Umfassen mehrerer Abtriebe eine Abtriebswelle bzw. sind mehrere Abtriebe als Abtriebswelle ausgebildet, so können mehrere Abtriebswellen oder sämtliche Abtriebswellen miteinander fluchten.

Auch kann es sein, dass die ein oder mehreren ersten Abtriebe und/oder die ein oder mehreren zweiten Abtriebe durch die Antriebswelle rotationsbeweglich antreibbar sind und jeweils eine innenliegende Verzahnung aufweisen, die mit einer korrespondierenden Gegenverzahnung der zentralen Antriebswelle und/oder einer korrespondierenden Gegenverzahnung einer oder mehrerer auf der Antriebswelle aufsitzender Antriebsmittel in Eingriff bringbar ist. Die korrespondierende Gegenverzahnung der Antriebswelle bzw. der ein oder mehreren auf der Antriebswelle aufsitzenden Antriebsmittel können somit als Außenverzahnung ausgebildet sein. Die Abtriebe mit ihrer innenliegenden Verzahnung als auch die Antriebswelle mit ihrer Gegenverzahnung bzw. die auf der Antriebswelle aufsitzenden Antriebsmittel mit ihrer Gegenverzahnung können mittels eines Laserprozesses hergestellt sein.

Denkbar ist hierbei, dass die jeweiligen Abtriebe sowie ihre innenliegende Verzahnung bei nicht vorhandener mechanischer Wirkverbindung fluchtend ausgerichtet sind, so dass die Antriebswelle mit korrespondierender Gegenverzahnung bzw. die auf der Antriebswelle aufsitzenden Antriebsmittel mit korrespondierender Gegenverzahnung durch Längsverschiebung der Antriebswelle und ohne weitere Ausrichtung mit dem oder den jeweiligen Abtrieben in Eingriff bringbar ist.

Auch kann es sein, dass die Antriebswelle entlang ihrer Längsachse wenigstens in einem ersten Teilbereich und wenigstens in einem zweiten Teilbereich eine korrespondierende Gegenverzahnung ausbildet oder wenigstens zwei Antriebsmittel an unterschiedlichen Positionen auf der Antriebswelle aufsitzen. Die Gegenverzahnung des ersten und des zweiten Teilbereichs bzw. die zwei an unterschiedlichen Positionen auf der Antriebswelle aufsitzenden Antriebsmittel können bei Wirkverbindung des Stellaktors mit mehreren Abtrieben jeweils zeitglich mit den Abtrieben mechanisch gekoppelt sein.

Die Erfindung ermöglicht somit eine Verstellung mehrerer Leitkomponenten eines Transportsystems über einen einzigen Antrieb. Insbesondere besteht die Geländerführung eines Transportsystems häufig aus mehreren getrennten Geländerabschnitten, die herkömmlicherweise jeweils einzeln über einen eigenen Antrieb verstellt werden oder für eine Verstellung mittels nur eines Antriebs mechanisch miteinander gekoppelt sein müssen. Beispielsweise ist eine gleichzeitige Verstellung von geraden und gekrümmten Geländerabschnitten schwierig bzw. muss in diesem Fall einzeln mittels eigener Antriebe erfolgen.

Mit vorliegender Erfindung können mechanisch getrennte Geländerabschnitte nunmehr mittels desselben Antriebs verstellt werden. Die Erfindung wird besonders bevorzugt verwendet, um die Breite einer Förderstrecke für mit Verpackungsmaterial umhüllte Artikelzusammenstellungen vor und/oder in einer Schrumpfvorrichtung einzustellen. Insbesondere ist es in einer Schrumpfvorrichtung notwendig, dass die einlaufenden Artikelzusammenstellungen zentriert auf der Förderstrecke angeordnet sind, und somit beidseitig denselben Abstand zu den Schachtwänden der Schrumpfvorrichtung aufweisen, damit ein beidseitig gleiches Schrumpfergebnis erzielt wird. In Abhängigkeit von der Größe bzw. Breite der Artikelzusammenstellung, müssen die seitlichen Geländerführungen entsprechend angepasst werden, um diese Zentrierung zu gewährleisten. Werden zuerst Artikelzusammenstellungen mit einer ersten Breite orthogonal zur Transportrichtung durch die Schrumpfvorrichtung transportiert und anschließend Artikelzusammenstellungen mit einer geringeren zweiten Breite, so muss der Abstand der Geländerführungen zueinander entsprechend verringert werden, damit auch die Artikelzusammenstellungen der geringeren zweiten Breite zentriert auf der Förderstrecke angeordnet sind und nicht gegebenenfalls einseitig näher an einer der Schachtwände entlang befördert werden.

Die Einstellung der Geländerführungen zueinander über die oben beschriebene Vorrichtung kann vollautomatisiert erfolgen. Beispielsweise kann eine sensorische Überwachung vorgesehen sein. Insbesondere ist vor dem Einlaufbereich der Schrumpfvorrichtung eine Detektionseinheit vorgesehen, die die Breite der Artikelzusammenstellung und gegebenenfalls weitere Parameter derselben ermittelt. Die Detektionseinheit kann beispielsweise eine sensorische Einrichtung mit einem Bilderfassungssensor o.ä. sein. Die Detektionseinheit übermittelt die ermittelten Daten an eine Steuerungseinheit, die aufgrund der ermittelten Breite etc. der Artikelzusammenstellung den benötigten Abstand zwischen den Geländerführungen ermittelt und die Vorrichtung zur Positionierung und/oder Ausrichtung entsprechend ansteuert, so dass über die beschriebene Getriebeanordnung die Geländerabschnitte der Geländerführung entsprechend eingestellt werden können. Insbesondere steuert die Steuerungseinheit den Stellaktor und/oder die Antriebswelle an und bewirkt, dass der Stellaktor selektiv mit einem der Abtriebe in eine mechanische Wirkverbindung gebracht wird.

Vorstellbar ist darüber hinaus, dass die Antriebswelle bei vorhandener mechanischer Wirkverbindung mit dem mindestens einen ersten Abtrieb durch eine Verschiebung, welche im Wesentlichen in Richtung einer Längsachse der Antriebswelle gerichtet ist, mit mindestens einem weiteren Abtrieb mechanisch in Wirkverbindung bringbar ist, wobei die mechanische Wirkverbindung zwischen dem mindestens einen ersten Abtrieb während und nach der Verschiebung weiterhin ausgebildet ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Querschnittsdarstellung einer Ausführungsform einer erfindungsgemäßen Vorrichtung 1.
Figur 2 zeigt eine schematische Draufsicht auf eine Ausführungsform eines Transportsystems mit zugehörigen Leitkomponenten, für welche die Ausrichtung mittels der erfindungsgemäßen Vorrichtung bewirkbar ist;
Figuren 3A bis 3C zeigen jeweils eine Getriebeanordnung, wie sie für eine Ausführungsform einer erfindungsgemäßen Vorrichtung Verwendung finden kann;
Figur 4 zeigt einen Querschnitt durch eine Getriebeanordnung gemäß den Figuren 3A bis 3C, wie sie für eine Ausführungsform einer erfindungsgemäßen Vorrichtung Verwendung finden kann;
Figur 5 zeigt ein weiteres Ausführungsbeispiel einer Getriebeanordnung, wie sie für eine Ausführungsform einer erfindungsgemäßen Vorrichtung Verwendung finden kann;
Figur 6 zeigt mehrere Zahnradmechanismen, wie sie zur Verbindung eines oder mehrerer Abtriebe mit den jeweiligen ein oder mehreren Leitkomponenten vorgesehen sein können;
Figuren 7 zeigen mehrerer flexible Zugelemente, wie sie zur Koppelung eines oder mehrerer der Abtriebe mit ein oder mehreren der Leitkomponenten vorgesehen sein können;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

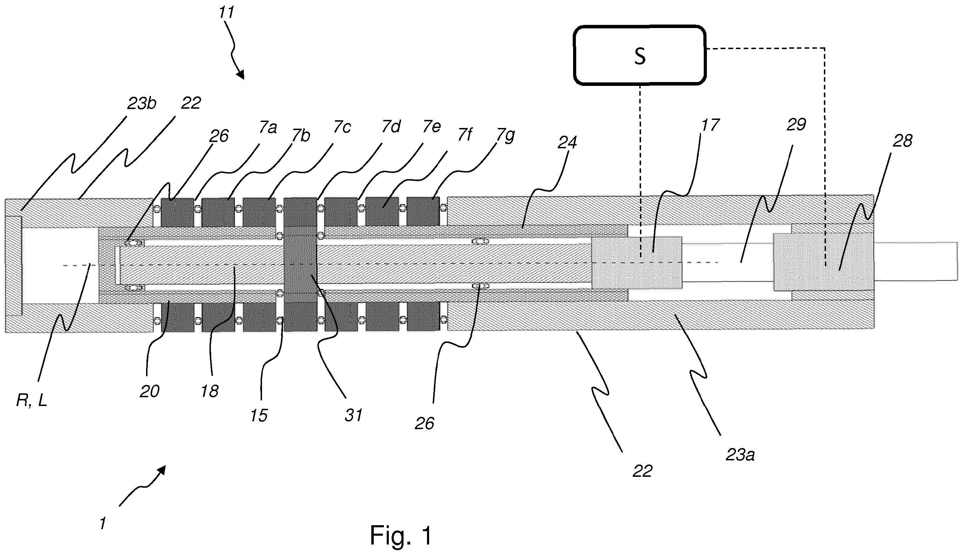

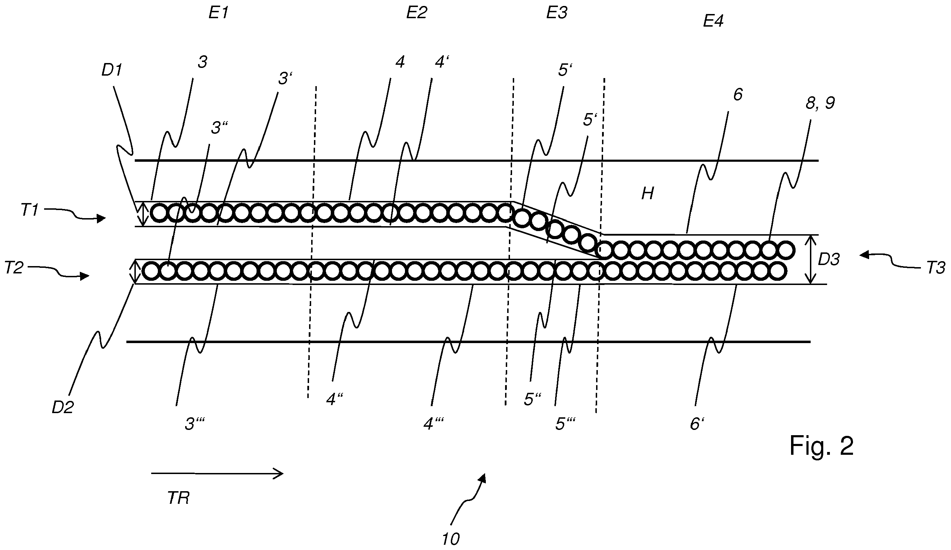

Figur 1 zeigt eine schematische Querschnittsdarstellung einer Ausführungsform einer erfindungsgemäßen Vorrichtung 1. Die Vorrichtung 1 ist vorgesehen zur selektiven Positionierung von Leitkomponenten 3, 4, 5 und 6 eines Transportsystems 19, welche Leitkomponenten 3, 4, 5 und 6 vorgesehen sind zur Führung von Artikeln 8 entlang ihres jeweiligen Transportpfades T1, T2 oder T3 (vgl. Figur 2).

Jede der Leitkomponenten 3, 3', 3" und 3'" sowie 4, 4', 4" und 4'" und 5, 5', 5" und 5'" sowie 6, 6', 6" und 6'" ist in der gezeigten Ausführungsform jeweils gekoppelt mit einem eigenen Abtrieb 7a bis 7g und somit über den jeweiligen zugeordneten Abtrieb 7a bis 7g verstellbar. Die in Figur 1 gezeigte Ausführungsform umfasst aus Gründen der Übersichtlichkeit lediglich sieben gezeigte Abtriebe 7a bis 7g. In der Praxis können jedoch Ausführungsformen Verwendung finden, bei welchen mehr oder weniger als sieben Abtriebe 7a bis 7g vorhanden sind. Beispielsweise können bis zu 25 Abtriebe 7a bis 7g vorhanden sein.

Auch kann es sein, dass mehrerer Leitkomponenten 3, 4, 5, 6 mit jeweils einem der Abtriebe 7a bis 7g gekoppelt sind. Beispielsweise können zwei erste Leitkomponenten 3 und 3' (vgl. Figur 2) an einen ersten Abtrieb 7a gekoppelt sein, während zwei weitere erste Leitkomponenten 3" und 3'" an einen zweiten Abtrieb 7b gekoppelt sind.

Sämtliche Abtriebe 7a bis 7g können unabhängig voneinander und bei mechanischer Wirkverbindung mit dem Stellaktor 17 um die gemeinsame Rotationsachse R rotieren.

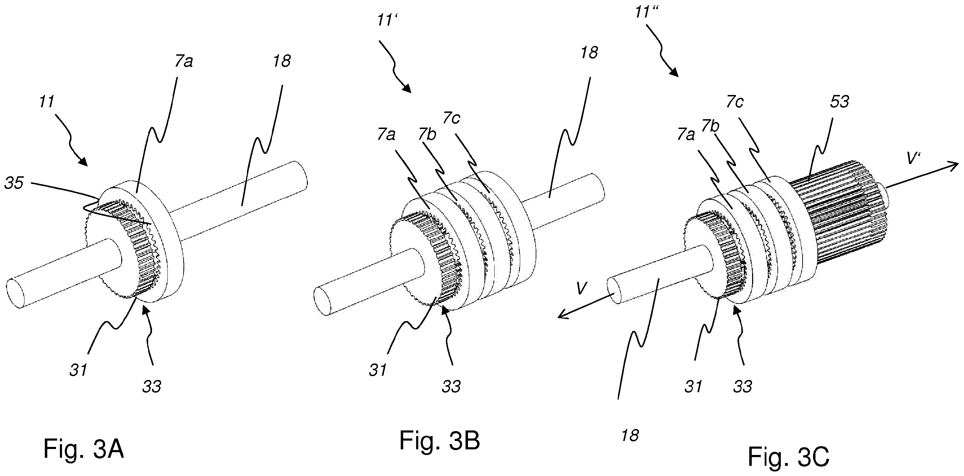

Zur selektiven mechanischen Wirkverbindung steht der Stellaktor 17 mit einer Antriebswelle 18 in Verbindung, welche Antriebswelle 18 über den Stellaktor 17 um die Rotationsachse R rotierbar angetrieben werden kann. Mit der Antriebswelle 18 drehfest verbunden und auf der Antriebswelle 18 aufsitzend ist zudem ein Antriebsmittel 31 dargestellt, welches vorliegend als Zahnrad mit Außenverzahnung 33 ausgebildet ist (vgl. Figuren 3 bis 5). Das Antriebsmittel 31 bzw. das auf der Antriebswelle 18 aufsitzende Zahnrad kann selektiv mit einem der Abtriebe 7a bis 7g formschlüssig in Eingriff gebracht werden.

Zur unabhängigen Rotationsbewegung um die Rotationsachse R stehen die Abtriebe 7a bis 7g mit ihrem oder ihren jeweiligen benachbarten Abtrieben 7a bis 7g jeweils über ein Axiallager 15 in Verbindung. Die Axiallager 15 und die Abtriebe 7a bis 7g sowie die Antriebswelle 18 bilden zusammen mit dem auf der Antriebswelle 18 aufsitzenden Antriebsmittel 31 die Getriebeanordnung 11. Die Rotationsachse R erstreckt sich in Längsrichtung L der Antriebswelle 18.

Zum Wechsel eines Eingriffs des Antriebsmittels 31 mit einem weiteren der Abtriebe 7a bis 7g bzw. zur selektiven Wirkverbindung mit einem weiteren der Abtriebe 7a bis 7g ist der Stellaktor 17 zusammen mit der Antriebswelle 18 in und entgegen der Längsrichtung L der Antriebswelle 18 verschiebbar. Hierzu stehen der Stellaktor 17 und die Antriebswelle 18 mit einem Schlitten 20 in Verbindung, der zusammen mit einem Gehäuse 22 eine Linearführung bildet. Der Schlitten 20 wird zusammen mit der Antriebswelle 18 und dem Stellaktor 17 relativ zum Gehäuse 22 bewegt und ist hierzu über Gleitlager 24 mit dem Gehäuse 22 in Verbindung gebracht. In Figur 1 nicht dargestellt, jedoch vorstellbar und in Figur 3C weiter offenbart, kann es zudem sein, dass mit der Linearführung eine nicht rotierbare Verzahnung 53 in Verbindung steht, welche zusammen mit der Antriebswelle 18 und über den Stellaktor 17 in und entgegen der Längsrichtung L verschiebbar ist. Die nicht rotierbare Verzahnung 53 kann hierbei mit sämtlichen Abtrieben 7a bis 7g, welche mit mit dem Antriebsmittel 31 in Eingriff gebracht sind, formschlüssig in Eingriff stehen, wobei die jeweiligen Abtriebe 7a bis 7g über die Verzahnung 53 in ihrer jeweiligen Ist- Position nicht rotierbar gehalten werden. Beispielsweise kann das Gleitlager 24 als Hohlwelle ausgeführt sein und eine nicht zusammen mit der Antriebswelle 18 rotierbare Außenverzahnung aufweisen. Vorstellbar ist hierbei, dass vor Wechsel eines Eingriffs des Antriebsmittels 31 mit einem der Abtriebe 7a bis 7g zu einem weiteren der Abtriebe 7a bis 7g eine fluchtende Ausrichtung des Antriebsmittel 31 mit seiner Außenverzahnung 33 (vgl. Figur 3) unter Berücksichtigung der nicht rotierbaren Verzahnung 53 erfolgt.

Wie in Figur 1 zudem erkennbar, ist das Gehäuse 22 aus einem ersten Gehäuseteil 23a und einem zweiten Gehäuseteil 23b gebildet, wobei zwischen den beiden Gehäuseteilen 23a und 23b die Getriebeanordnung 11 gelagert ist.

Das Verschieben des Schlittens 20 und des Stellaktors 17 zusammen mit seiner Antriebswelle 18 wird im Ausführungsbeispiel der Figur 1 über einen weiteren Aktor 28 bewirkt. Der weitere Aktor 28 und der Stellaktor 17 sind als Servomotoren oder als Schrittmotoren ausgebildet. Der weitere Aktor 28 ist ortsfest am Gehäuse 3 bzw. an dem ersten Gehäuseteil 23a angeordnet.

Zur Bewegung des Schlittens 20 ist der weitere Aktor 28 über einen Hubbolzen 29 mit dem Stellaktor 17 in Verbindung gebracht. Der weitere Aktor 28 kann den Hubbolzen 29 in seiner Längsrichtung und ebenso in Längsrichtung L der Antriebswelle 18 bewegen. Die Antriebswelle 28 und der Hubbolzen 29 können daher miteinander fluchten.

In Figur 1 ist der Stellaktor 17 über die Antriebswelle 18 mit dem Abtrieb 7d mechanisch in Wirkverbindung gebracht, so dass die Verstellung der mit dem Abtrieb 7d gekoppelten ein oder mehreren Leitkomponenten bei Betätigung des Stellaktors 17 und hieraus resultierender Rotation der Antriebswelle 18 zusammen mit dem drehfest auf der Antriebswelle 18 aufsitzenden Antriebsmittel 31 nun möglich wäre. Soll beispielhaft hierauf folgend die Verstellung einer oder mehrerer weiterer Leitkomponenten 3, 4, 5, 6 erfolgen, welche beispielsweise mit dem Abtrieb 7c gekoppelt sind, so wäre mittels des Aktors 28 und des Hubbolzens 29 zunächst eine Verschiebung des Schlittens 20 und des am Schlitten 20 angeordneten Stellaktors 17 zusammen mit der Antriebswelle 18 und dem Antriebsmittel 31 um einen definierten Betrag in Längsrichtung L der Antriebswelle 18 vorzunehmen. Sofern die Antriebswelle 18 oder ein oder mehrere auf der Antriebswelle 18 aufsitzende Antriebsmittel 31 aus der Verschiebung resultierend mit dem Abtrieb 7c mechanisch und unter Formschluss in Verbindung stehen, könnte bei Betätigung des Stellaktors 17 eine Verstellung der mit dem Abtrieb 7c gekoppelten ein oder mehreren Leitkomponenten 3, 4, 5 bzw. 6 erfolgen.

In Figur 1 nicht zweifelsfrei erkennbar, jedoch in den nachfolgenden Figuren verdeutlicht, sind die Abtriebe 7a bis 7g als Abtriebswellen ausgebildet, die mit der Antriebswelle 18 fluchten.

Sind die Antriebsmittel 31 bzw. ist die Antriebswelle 18 mit einem der Abtriebe 7a bis 7g mechanische in Wirkverbindung gebracht, so rotiert bei betätigtem Stellaktor 17 der jeweilige Abtrieb 7a bis 7g zusammen mit der Antriebswelle 18 frequenzhomogen.

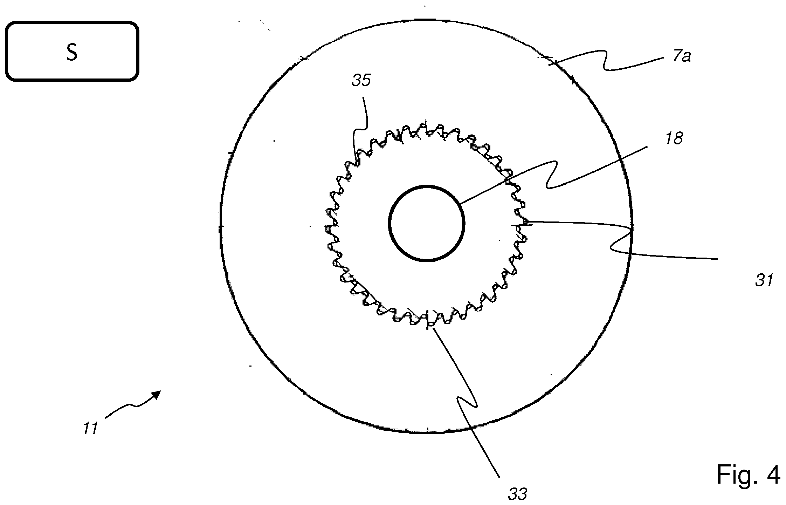

Erkennbar ist zudem eine Steuerungseinheit S, welche mit dem Stellaktor 17 und mit dem weiteren Aktor 28 in Verbindung steht und deren Funktionsprinzip nachfolgend in der Beschreibung zu Figur 4 noch näher erläutert wird.

**Figur 2** zeigt schematische Draufsicht auf eine Ausführungsform eines Transportsystems 10 mit zugehörigen Leitkomponenten 3, 4, 5 und 6, für welche die Ausrichtung mittels der erfindungsgemäßen Vorrichtung 1 bewirkbar ist. Im Rahmen des Transportsystems 10 der Figur 2 werden Artikel 8 in Transportrichtung TR transportiert. Im Bereich des Transportsystems 10 können beispielsweise ein oder mehrere Verpackungseinrichtungen (nicht dargestellt) und/oder ein oder mehrerer Befüllungseinrichtungen (nicht dargestellt) vorhanden sein, welche die Artikel 8 bzw. die Behälter 9 mit Verpackungsmaterial beaufschlagen oder mit flüssigem Medium befüllen.

Der Transport erfolgt über die gesamte Transportstrecke über eine Horizontalfördereinrichtung H, wobei die Artikel 8 bzw. die Behälter 9 auf der Horizontalfördereinrichtung H aufstehen.

Sowohl die Artikel 8 des Transportpfades T1 als auch die Artikel 8 des Transportpfades T2 besitzen eine identische Artikelgeometrie bzw. einen identischen Artikeldurchmesser. Aus diesem Grunde befinden sich auch im aus dem ersten Transportpfad T1 und aus dem zweiten Transportpfad T2 resultierenden dritten Transportpfad T3 lediglich Artikel 8 bzw. Behälter 9 mit identischer Artikelgeometrie.

Die relativen Abstände D1, D2 und D3 der jeweiligen Leitkomponenten 3, 4, 5 und 6 sind vorliegend derart gewählt, dass die Artikel 8 bzw. die Behälter 9 ohne zu klemmen oder zu kippen im jeweiligen Transportpfad T1, T2 und T3 transportiert werden können.

Unter Berücksichtigung des ersten Abschnittes E1 des Transportsystems 10 entspricht der relative Abstand zweier erster Leitkomponenten 3 und 3' daher etwas mehr als dem maximalen Durchmesser der zwischen den Leitkomponenten 3 und 3' transportierten Artikel 8 bzw. Behälter 9. Wie vorhergehend bereits erwähnt, sind die zwischen den weiteren ersten Leitkomponenten 3" und 3'" zu transportierenden Artikel 8 bzw. Behälter 9 hinsichtlich maximalem Artikeldurchmesser identisch ausgebildet, so dass gilt: D1≈ D2. Folglich ist der relative Abstand der Leitkomponenten 4 und 4' sowie 4" und 4'" und auch 5 und 5' sowie 5" und 5'" aufgrund des gemeinsam bildenden Transportpfades T1 bzw. T2 identisch zum relativen Abstand der Leitkomponenten 3 und 3' ausgebildet.

Da im Transportpfad T3 jeweils zwei Artikel 8 nebeneinander transportiert werden und ein Verklemmen sowie ein Kippen der Artikel 9 weiterhin unterbunden werden soll, kann darüber hinaus über den Abstand der Leitkomponenten 6 und 6' festgesetzt werden: D3 ≈ D1 + D2.

Sollen nach erfolgtem Transport weitere Artikel 8 bzw. Behälter 9 transportiert werden, welche gegenüber den in Figur 2 dargestellten Artikeln einen vergrößerten oder verminderten maximalen Artikeldurchmesser besitzen, so ist zur Vermeidung einer Klemmung oder eines Kippens der jeweiligen Artikel 8 bzw. Behälter 9 eine Anpassung des relativen Abstandes jeweils zweier paarweise die Artikel 8 bzw. die Behälter 9 über den jeweiligen Abschnitt E1, E2, E3 und E4 führender Leitkomponenten 3, 4, 5 und 6 vorzunehmen.

Beispielhaft kann vorgesehen, dass unter Berücksichtigung der beiden Leitkomponenten 3 und 3' des ersten Abschnittes E1 lediglich die Leitkomponente 3' mit einem Abtrieb 7a bis 7g gekoppelt ist und unter Betätigung des jeweiligen Abtriebs 7a bis 7g über den vorherig beschriebenen Stellaktor 17 (vgl. Figur 1) der relative Abstand der beiden Leitkomponenten 3 und 3' vergrößert oder vermindert werden kann.

Auch kann vorgesehen sein, dass sowohl die Leitkomponente 3' als auch die Leitkomponente 3 mit jeweils einem eigenen Abtrieb 7a bis 7g gekoppelt sind und der relative Abstand der beiden Leitkomponenten 3 und 3' zeitgleich oder nacheinander angepasst wird, indem der Stellaktor 17 mit den jeweiligen Abtrieben 7a bis 7g mechanisch in Wirkverbindung gebracht wird.

Zur Verdeutlichung sei darüber hinaus erwähnt, dass ebenso die Leitkomponente 3 als auch die Leitkomponente 3' mit einem gemeinsamen Abtrieb 7a bis 7g gekoppelt sein können, wobei unter mechanischer Wirkverbindung des jeweiligen Abtriebes 7a bis 7g mit dem Stellaktor 17 die Leitkomponenten 3 und 3' zeitsynchron verstellt werden bzw. der relative Abstand der Leitkomponenten 3 und 3' zeitsynchron vergrößert oder vermindert wird. In jedem Fall ist zur Anpassung des Transportsystems 10 und seiner Leitkomponenten 3, 4, 5 und 6 an unterschiedliche maximale Artikeldurchmesser lediglich ein Stellaktor 17 notwendig, welcher unter selektiver Wirkverbindung mit den jeweiligen Abtrieben 7a bis 7g die Positionierung der Leitkomponenten 3, 4, 5 und 6, derart vornehmen kann, dass die Artikel 8 bzw. Behälter 9 ohne zu kippen oder zu klemmen über die Abschnitte E1 bis E4 transportierbar sind.

Wie Figur 2 zudem zeigt, können mehrerer erste Leitkomponenten 3" und 3'" des ersten Abschnitt E1, mehrere zweiten Leitkomponenten 4" und 4'" des zweiten Abschnittes E2 und mehrerer dritte Leitkomponenten 5" und 5'" des dritten Abschnittes E3 einen gemeinsamen Transportpfad T2 bilden. Hierzu ist der relative Abstand zwischen den zwei ersten Leitkomponenten 3" und 3'" identisch zum relativen Abstand der zwei zweiten Leitkomponenten 4" und 4'" und identisch zum relativen Abstand der zwei dritten Leitkomponenten 5" und 5'" ausgebildet. Die identischen Abstände werden auch nach Anpassung des Transportsystems 10 und seiner Leitkomponenten 3, 4, 5 und 6 an weitere Artikel 8 mit vermindertem oder vergrößertem maximalen Artikeldurchmesser beibehalten.

**Figuren 3A bis 3C** zeigen jeweils eine Getriebeanordnung 11 bzw. 11' bzw. 11", wie sie für eine Ausführungsform einer erfindungsgemäßen Vorrichtung 1 (vgl. Figur 1) Verwendung finden können.

Wie bereits vorhergehend zum Ausführungsbeispiel der Figur 1 beschrieben, setzt sich die Getriebeanordnung 11 bzw. 11' bzw. 11" jeweils aus einer Antriebswelle 18, ein oder mehreren auf der Antriebswelle 18 aufsitzenden Antriebsmitteln 31 und mehreren Abtrieben 7a bis 7g zusammen, von welchen in den Figuren 3B und 3C die Abtriebe 7a bis 7c dargestellt sind. Zur Veranschaulichung wurde in den Figuren 3B und 3C auf die Darstellung der Abtriebe 7d bis 7g verzichtet. In der Figur 3A ist lediglich der Abtrieb 7a dargestellt.

Die Antriebsmittel 31 sind jeweils als Zahnräder ausgebildet und besitzen jeweils eine Außenverzahnung 33 . Erkennbar ist in den Figuren 3A bis 3C zudem, dass die Abtriebe 7a bis 7c als Abtriebswellen ausgebildet sind und jeweils eine zur Außenverzahnung 33 der Antriebsmittel 31 korrespondierend ausgebildete Innenverzahnung 35 (vgl. auch Figur 4) aufweisen.

Die Abtriebe 7a bis 7c bzw. die Abtriebswellen fluchten mit der Antriebswelle 18, so dass die Antriebswelle 18 durch die Abtriebe 7a bis 7c bzw. durch die Abtriebswellen hindurchführbar ist.

Da die Antriebswelle 18 mit dem Stellaktor 17 (vgl. Figur 1) gekoppelt ist, kommt bei Aufnahme des Antriebsmittels 31 durch einen oder mehrere der Abtriebe 7a bis 7c ein Formschluss zwischen der Außenverzahnung 33 bzw. 33' des jeweiligen Antriebsmittels 31 bzw. und der korrespondierenden Innenverzahnung 35 des jeweiligen Abtriebs 7a bis 7c zustande. Eine mechanische Wirkverbindung zwischen dem Stellaktor 17 und dem oder den jeweiligen Abtrieben 7a bis 7c ist bei Formschluss hergestellt.

Wie im Ausführungsbeispiel der Figur 3B erkennbar, sitzt auf der Antriebswelle 18 lediglich ein Antriebsmittel 31 auf, welches nacheinander mit jeweils einem der Abtriebe 7a bis 7c bzw. mit jeweils einer Innenverzahnung 33 der Abtriebe 7a bis 7c in Eingriff bringbar ist. Bei der in Figur 3B gezeigten Ausführungsform sind daher jeweils die mit einem Abtrieb 7a bis 7c gekoppelten ein oder mehreren Leitkomponenten 3, 4, 5 bzw. 6 verstellbar.

Figur 3C lässt darüber hinaus ein Ausführungsbeispiel für eine Getriebeanordnung 11" erkennen, bei welcher eine nicht rotierbare Verzahnung 53 dargestellt ist, welche zusammen mit der Antriebswelle 18 in Längsrichtung der Antriebswelle 18 bzw. in Pfeilrichtung V und V' verschiebbar ausgebildet ist. Die nicht rotierbare Verzahnung 53 ist jedoch nicht drehfest mit der Antriebswelle 18 verbunden, so dass bei Rotation der Antriebswelle 18 keine Drehbewegung der nicht rotierbaren Verzahnung 53 erfolgt. Beispielsweise kann die nicht rotierbare Verzahnung 53 über Radiallager 26 (vgl. Figur 1) mit der Antriebswelle 18 in Verbindung stehen. Wie vorhergehend bei Beschreibung zum Ausführungsbeispiel der Figur 1 bereits erwähnt, kann die nicht rotierbare Verzahnung 53 mit sämtlichen Abtrieben 7a bis 7g in Eingriff stehen, welche nicht mit der Außenverzahnung 33 der ein oder mehreren Antriebsmittel 31 in Eingriff gebracht sind. Eine unbeabsichtigte Rotation von ein oder mehreren Abtrieben 7a bis 7g und eine hiermit einhergehende unbeabsichtigte Verstellung von Leitkomponenten 3, 4, 5 und/oder 6 kann bei dieser Ausführungsform ausgeschlossen werden.

In Figur 3C nicht dargestellt, jedoch zudem vorstellbar, ist, dass die nicht rotierbare Verzahnung 53 als Zahnradkonstruktion ausgebildet ist, welche beidseitig an die ein oder mehreren Antriebsmittel, vorliegend das Antriebsmittel 31, direkt anschließt. Somit kann bei einer Verschiebung der Antriebswelle 18 in Längsrichtung bzw. in Pfeilrichtung V und V' und einem Wechsel von einem ersten der Abtriebe 7a bis 7c zu einem weiteren der Abtriebe 7a bis 7c die Zahnradkonstruktion mit dem ersten der Abtriebe 7a bis 7c und dem zweiten der Abtriebe 7a bis 7c in Eingriff gebracht sein. Ein unbeabsichtigtes Rotieren des ersten der Abtriebe 7a bis 7c und/oder des zweiten der Abtriebe 7a bis 7c während des Wechsel kann aufgrund des Eingriffs der nicht rotierbaren Zahnradkonstruktion ausgeschlossen werden.

Ein weiterer vorteilhafter Effekt welcher sicher bei Ausgestaltung gemäß Figur 3C ergibt, ist darin zu finden, dass sich aufgrund des Eingriffs der Abtriebe 7a bis 7c mit der nicht rotierbaren Verzahnung 53 die jeweiligen Abtriebe 7a bis 7c mit ihrer innenligenden Verzahnung 35 in Flucht befinden. Das Antriebsmittel 31 kann hierdurch mittels einer Bewegung der Antriebswelle 18 in Längsrichtung bzw. in Pfeilrichtung V und V' durch die Abtriebe 7a bis 7g geführt werden, ohne dass eine vorhergehende Rotation der Antriebswelle 18 zum Zwecke einer Orienteriung der außenliegenden Verzahnung 33 erfolgen muss.

**Figur 4** zeigt einen Querschnitt durch eine Getriebeanordnung 11, 11' bzw. 11" gemäß den Figuren 3A bis 3C, wie sie für eine Ausführungsform einer erfindungsgemäßen Vorrichtung 1 Verwendung finden kann.

Zu erkennen sind auch im Querschnitt der Figur 4 die Antriebswelle 18, das mit der Antriebswelle 18 drehfest verbundene und auf der Antriebswelle 18 aufsitzende Antriebsmittel 31 mit Außenverzahnung 33 sowie der als Welle ausgebildete Abtrieb 7a.

In Figur 4 ist das Antriebsmittel 31 mit seiner Außenverzahnung 33 formschlüssig mit dem Abtrieb 7a und seiner Innenverzahnung 35 in Eingriff gebracht.

Symbolisch dargestellt ist nochmals die Steuerungseinheit S aus Figur 1. Soll über eine Verschiebung der Antriebswelle 18 entlang ihrer Längsrichtung V bzw. V' (vgl. Figur 3C) der formschlüssige Eingriff des Antriebsmittel 31 mit dem Abtrieb 7a gelöst werden und ein formschlüssiger Eingriff des Antriebsmittels 31 mit einem weiteren der Abtriebe 7b bis 7g hergestellt werden, so müssen die Außenverzahnung 33 des Antriebsmittel 31 und die Innenverzahnung 35 des jeweiligen Abtriebs 7b bis 7g derart zueinander orientiert sein, dass über eine Verschiebung der Antriebswelle 18 in Richtung ihrer Längsache V bzw. V' ein formschlüssiger Eingriff der Innenverzahnung 35 mit der Außenverzahnung 33 herstellbar ist.

Der Steuerungseinheit S kommt daher die Aufgabe zu, bei mechanischer Wirkverbindung des Stellaktors 17 mit einem der Abtriebe 7a bis 7g bzw. bei Eingriff des Antriebsmittel 31 mit einem der Abtriebe 7a bis 7g eine Rotation des jeweiligen Abtriebes 7a bis 7g derart vorzunehmen, dass nach erfolgter Rotation der Eingriff des Antriebsmittels 31 mit dem jeweiligen Abtrieb 7a bis 7g gelöst und das Antriebsmittel 31 über eine Längsverschiebung der Antriebswelle 18 mit einem oder mehreren weiteren der Abtriebe 7a bis 7g in Eingriff bringbar ist. Die Steuerungseinheit S ist hierzu mit dem Stellaktor 17 und mit dem weiteren Aktor 18, welcher die Längsverschiebung der Antriebswelle 18 vornimmt, gekoppelt.

Die jeweiligen nicht mit dem Antriebsmittel 31 in Eingriff stehenden Abtreibe 7a bis 7g können eine vordefinierte Orientierung aufweisen, die durch ihren Eingriff mit der nicht rotierbaren Verzahnung 53 (vgl. Figur 3C) vorgegeben wird.

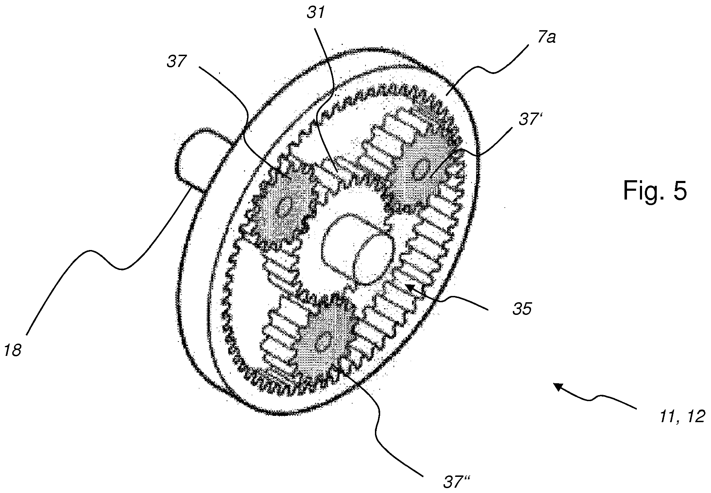

**Figur 5** zeigt ein weiteres Ausführungsbeispiel einer Getriebeanordnung 11, wie sie für eine Ausführungsform einer erfindungsgemäßen Vorrichtung 1 Verwendung finden kann. Gegenüber der in den Figuren 3 gezeigten Getriebeanordnungen 11, 11' und 11" bietet das als Planetengetriebe 12 ausgebildete Getriebe 11 der Figur 5 mitunter den Vorteil einer möglichen Übertragung hoher Drehmomente.

In Figur 5 ist aus Gründen der Übersichtlichkeit weiterhin lediglich ein Abtrieb 7a dargestellt. Für den angesprochenen Fachmann ist jedoch klar, dass auch für die in Figur 5 gezeigte Ausführungsform einer Getriebeanordnung 11 mehrerer weitere Abtriebe 7c bis 7g vorhanden sein können, die durch eine Längsverschiebung der Antriebswelle 18 mit dem Antriebsmittel 31 oder weiteren auf der Antriebswelle 18 aufsitzenden und drehfest mit der Antriebswelle 18 verbundenen Antriebsmitteln 31 in Eingriff bringbar ist.

Das Planetengetriebe 12 umfasst mehrerer weitere Zahnräder 37, 37' und 37", über welche das auf der Antriebswelle 18 aufsitzende Antriebsmittel 31 mit dem Abtrieb 7a zur Drehmomentübertragung gekoppelt ist.

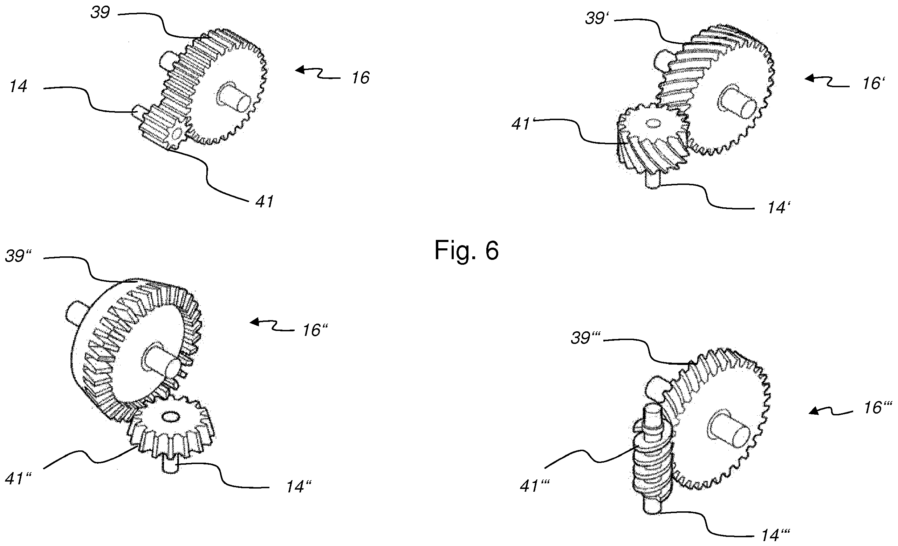

**Figur 6** zeigt mehrere Zahnradmechanismen 16, 16', 16", 16"', wie sie zur Verbindung eines oder mehrerer Abtriebe 7a bis 7g mit den jeweiligen ein oder mehreren Leitkomponenten 3, 4, 5 und/oder 6 vorgesehen sein können.

Beispielsweise können die Abtriebe 7a bis 7g (vgl. Figuren 1 und 3) über eine Außenverzahnung verfügen, welche mit einer Außenverzahnung eines ersten Zahnrades 39, 39', 39" bzw. 39"' des jeweiligen Zahnradmechanismus 16, 16', 16" bzw. 16'" in Eingriff gebracht ist.

Das erste Zahnrad 39, 39', 39" bzw. 39'" kann an ein weiteres Zahnrad 41, 41', 41" bzw. 41'" gekoppelt sein, welches drehfest mit einer weiteren Welle 14, 14', 14" bzw. 14'" verbunden ist.

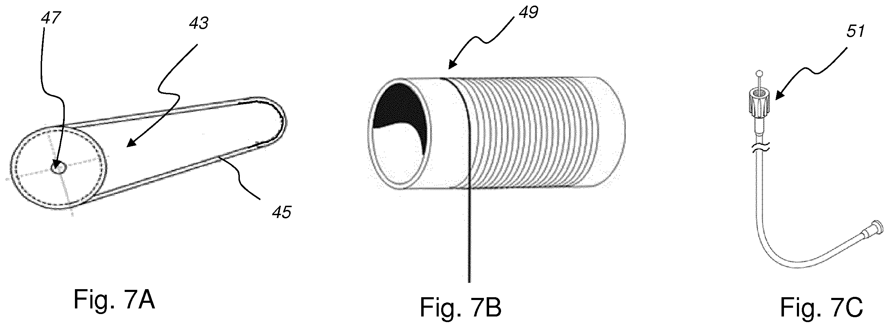

An die Welle 14,14',14" bzw. 14'" können beispielsweise flexible Zugelemente (vgl. Figur 7) gekoppelt sein, die mit den jeweiligen Leitkomponenten 3, 4, 5 bzw. 6 in Verbindung stehen.

**Figuren 7** zeigen mehrerer flexible Zugelemente, wie sie zur Koppelung eines oder mehrerer der Abtriebe mit ein oder mehreren der Leitkomponenten 3, 4, 5, 6 vorgesehen sein können.

So ist in Figur 7A ein Kettenrad 43 dargestellt, dass über eine Kette 45 mit den ein oder mehreren Leitkomponenten 3, 4, 5 bzw. 6 in Verbindung steht. Das Kettenrad 43 besitzt eine Aussparung 47, in welche beispielsweise die in Figur 6 dargestellte weitere Welle 14 eingreifen und drehfest mit dem Kettenrad 43 verbunden sein kann.

Bezugsziffern 49 und 51 der Figuren 7B und 7C verweisen auf eine Seiltrommel und auf einen Bowdenzug. Ebenso kann in weiteren Ausführungsformen der vorliegenden Erfindung ergänzend oder alternativ zu dem in Figur 7A gezeigten Kettenrad 43 eine Seiltrommel 49 und/oder ein Bowdenzug mit der weiteren Welle 14 und den jeweiligen Leitkomponenten 3, 4, 5 bzw. 6 in Verbindung stehen.

Für den angesprochenen Fachmann ist klar, dass die in den Figuren 7 gezeigten flexiblen Zugelemente lediglich eine beispielhafte Möglichkeit der Koppelung von Abtrieben 7a bis 7g mit Leitkomponenten 3, 4, 5 bzw. 6 darstellen. Darüber hinaus können in der Praxis weitere alternative oder ergänzende Mechanismen vorgesehen sein, die bekannt sind und aus diesem Grunde nicht explizit erwähnt werden.

Die Erfindung wurde unter Bezugnahme auf eine bevorzugte Ausführungsform beschrieben.

### Bezugszeichenliste

- 1: Vorrichtung
- 3: Leitkomponente
- 4: Leitkomponente
- 5: Leitkomponente
- 6: Leitkomponente
- 7: Abtrieb
- 8: Artikel
- 9: Behälter
- 10: Transportsystem
- 12: Planetengetriebe
- 14: weitere Welle
- 15: Axiallager
- 16: Zahnradmechanismus
- 17: Stellaktor
- 18: Antriebswelle
- 20: Schlitten
- 22: Gehäuse
- 23: Gehäuseabschnitt
- 24: Gleitlager
- 26: Radiallager
- 28: weiterer Aktor
- 29: Hubbolzen
- 31: Antriebsmittel
- 33: Außenverzahnung
- 35: Innenverzahnung
- 37: Zahnrad
- 39: erstes Zahnrad
- 41: weiteres Zahnrad
- 43: Kettenrad
- 47: Aussparung
- 49: Seiltrommel
- 51: Bowdenzug
- 53: Nicht rotierbare Verzahnung
- E: Abschnitt
- L: Längsrichtung
- R: Rotationsachse
- S: Steuerungseinrichtung
- T1: Transportpfad
- T2: Transportpfad
- T3: Transportpfad
- V: Verschieberichtung

## Patentansprüche

1. Vorrichtung (1) zur Positionierung und/oder Ausrichtung ein oder mehrerer verstellbarer Leitkomponenten (3, 4, 5, 6) zur Lenkung und/oder Führung von Artikeln (8) in einem Transportsystem (10), bei welcher ein oder mehrerer der Leitkomponenten (3, 4, 5, 6) an mindestens einen ersten Abtrieb (7a bis 7g) einer Getriebeanordnung (11) gekoppelt und über den mindestens einen ersten Abtrieb (7a bis 7g) positionier- und/oder ausrichtbar sind, **dadurch gekennzeichnet, dass** ein oder mehrere weitere Leitkomponenten (3, 4, 5, 6) an mindestens einen zweiten Abtrieb (7a bis 7g) der Getriebeanordnung (11) gekoppelt und über den mindestens einen zweiten Abtrieb (7a bis 7g) positionier- und/oder ausrichtbar sind, wobei die Vorrichtung (1) einen Stellaktor (17) umfasst, der selektiv mit dem mindestens einen ersten Abtrieb (7a bis 7g) und/oder mit dem mindestens einen zweiten Abtrieb (7a bis 7g) zur Ausrichtung und/oder Positionierung der mit dem jeweiligen Abtrieb (7a bis 7g) gekoppelten ein oder mehreren Leitkomponenten (3, 4, 5, 6) mechanisch in Wirkverbindung bringbar ist.

2. Vorrichtung (1) nach Anspruch 1, bei welcher der Stellaktor (17) über eine zentrale und über den Stellaktor (17) rotationsbeweglich antreibbare Antriebswelle (18) selektiv mit dem mindestens einen ersten Abtrieb (7a bis 7g) und/oder mit dem mindestens einen zweiten Abtrieb (7a bis 7g) mechanisch in Wirkverbindung bringbar ist.

3. Vorrichtung (1) nach Anspruch 2, bei welcher die Antriebswelle (18) oder der Stellaktor (17) zusammen mit der Antriebswelle (18) durch eine Verschiebung, welche im Wesentlichen in Richtung (V, V') einer Längsachse der Antriebswelle (18) gerichtet ist, selektiv mit dem mindestens einen ersten Abtrieb (7a bis 7g) und/oder mit dem mindestens einen zweiten Abtrieb (7a bis 7g) in Wirkverbindung bringbar ist.

4. Vorrichtung (1) nach Anspruch 3, bei welcher die Antriebswelle (18) oder der Stellaktor (17) zusammen mit der Antriebswelle (18) zu ihrer Verschiebung an einen relativ zu einem Gehäusebereich (22) bewegbaren Führungsschlitten (20) einer Linearführung gekoppelt sind.

5. Vorrichtung (1) nach Anspruch 4, bei welcher die Linearführung eine sich bereichsweise entlang der Antriebswelle (18) erstreckende und zusammen mit der Antriebswelle (18) verschiebbare Verzahnung (53) umfasst, die nicht rotierbar ausgebildet ist und mit einem oder mehreren, vorzugsweise jedoch mit sämtlichen der Abtriebe (7a bis 7g), welche nicht mit dem Stellaktor (17) mechanisch in Wirkverbindung gebracht sind, in Eingriff steht.

6. Vorrichtung (1) nach Anspruch 3,4 oder 5, bei welcher die Verschiebung der Antriebswelle (18) oder die Verschiebung des Stellaktors (17) zusammen mit der Antriebswelle (18) mittels eines weiteren Aktors (28) erfolgt.

7. Vorrichtung (1) nach Anspruch 6, bei welcher der weitere Aktor (28) ortsfest an einem Gehäusebereich (22) der Vorrichtung (1) angeordnet ist.

8. Vorrichtung (1) nach einem oder mehreren der vorhergehenden Ansprüche 2 bis 7, bei welcher der mindestens eine erste Abtrieb (7a bis 7g) und/oder der mindestens eine zweite Abtrieb (7a bis 7g) jeweils eine Aufnahme für die Antriebswelle (18) ausbilden, durch welche Aufnahme die Antriebswelle (18) bei Wirkverbindung mit dem jeweiligen Abtrieb (7a bis 7g) ein- oder hindurchtritt.

9. Vorrichtung (1) nach Anspruch 8, bei welcher die Aufnahme des mindestens einen ersten Abtriebs (7a bis 7g) und die Aufnahme des mindestens einen zweiten Abtriebs (7a bis 7g) derart angeordnet sind, dass sie miteinander fluchten.

10. Vorrichtung (1) nach einem oder mehreren der Ansprüche 2 bis 9, bei welcher der mindestens eine erste Abtrieb (7a bis 7g) und/oder der mindestens eine zweite Abtrieb (7a bis 7g) durch die Antriebswelle (18) rotationsbeweglich antreibbar sind und jeweils eine innenliegende Verzahnung (35) aufweisen, die mit einer korrespondierenden Gegenverzahnung (33) der zentralen Antriebswelle (18) und/oder einer korrespondierenden Gegenverzahnung (33) einer oder mehrerer auf der Antriebswelle (18) aufsitzender Antriebsmittel (31zur mechanischen Wirkverbindung in Eingriff bringbar ist.

11. Vorrichtung (1) nach Anspruch 10, bei welcher die Antriebswelle (18) entlang ihrer Längsachse wenigstens in einem ersten Teilbereich und wenigstens in einem zweiten Teilbereich eine korrespondierende Gegenverzahnung (33) ausbildet oder bei welcher wenigstens zwei Antriebsmittel (31') an unterschiedlichen Positionen auf der Antriebswelle (18) aufsitzen.

12. Vorrichtung (1) nach einem oder mehreren der Ansprüche 2 bis 11, bei welcher der mindestens eine erste Abtrieb (7a bis 7g) und der mindestens eine zweite Abtrieb (7a bis 7g) zur Ausrichtung und/oder Positionierung der an den jeweiligen Abtrieb (7a bis 7g) gekoppelten ein oder mehreren Leitkomponenten (3, 4, 5, 6) unabhängig voneinander rotationsbeweglich ausgebildet sind und eine gemeinsame Rotationsachse (R) aufweisen, welche Rotationsachse (R) im Wesentlichen in Längsrichtung der Antriebswelle (18) verläuft.

13. Vorrichtung (1) nach Anspruch 12, bei welcher wenigstens zwei Abtriebe (7a bis 7g), vorzugsweise jedoch sämtliche Abtriebe (7a bis 7g) der Vorrichtung (1) benachbart zueinander angeordnet und zur unabhängigen Rotationsbewegung direkt über ein oder mehrere Axiallager (15) mit ihrem jeweiligen benachbarten Abtrieb (7a bis 7g) in Verbindung gebracht sind.

14. Vorrichtung (1) nach einem oder mehreren der vorhergehenden Ansprüche 1 bis 13, bei welchem der Stellaktor (17) und/oder der weitere Aktor (18) als Servomotoren und/oder als Schrittmotoren ausgebildet sind.

15. Vorrichtung (1) nach einem oder mehreren der Ansprüche 1 bis 14, bei welcher der mindestens eine erste Abtrieb (7a bis 7g) und/oder der mindestens eine zweite Abtrieb (7a bis 7g) jeweils über ein oder mehrere flexible Zugelemente und insbesondere über einen Bowdenzug (51), einen Seilzug (49), eine Kette (45) oder dergleichen mit den ein oder mehreren Leitkomponenten (3, 4, 5, 6) gekoppelt ist.

16. Vorrichtung (1) nach einem oder mehreren der Ansprüche 1 bis 14, bei welcher wenigstens ein dritter Abtrieb (7a bis 7g) und/oder mehrere weitere Abtriebe (7a bis 7g) vorhanden sind, die jeweils mit ein oder mehreren weiteren Leitkomponenten (3, 4, 5, 6) gekoppelt sind und mit welchen der Stellaktor (17) zur Ausrichtung und/oder Positionierung der mit dem jeweiligen Abtrieb (7a bis 7g) gekoppelten ein oder mehreren Leitkomponenten (3, 4, 5, 6) mechanisch in Wirkverbindung bringbar ist.

17. Vorrichtung (1) nach einem oder mehreren der Ansprüche 1 bis 16, welche Vorrichtung (1) vorgesehen ist zur Ausrichtung und/oder Positionierung ein oder mehrerer verstellbarer Leitkomponenten (3, 4, 5, 6) in einem Transportsystem (10) als Bestandteil einer Verpackungseinrichtung für Artikel und/oder ein oder mehrerer verstellbarer Leitkomponenten (3, 4, 5, 6) in einem Transportsystem (10) als Bestandteil einer Befüllungseinrichtung für als Behälter (9) ausgebildete Artikel (8) mit flüssigem Medium.

## Claims

1. A device (1) for positioning and/or orienting one or more adjustable directing components (3, 4, 5, 6) for steering and/or guiding articles (8) in a transport system (10), in which one or more of the directing components (3, 4, 5, 6) are coupled to at least one first output (7a to 7g) of a transmission arrangement (11) and can be positioned and/or oriented via the at least one first output (7a to 7g), **characterized in that** one or more further directing components (3, 4, 5, 6) are coupled to at least one second output (7a to 7g) of the transmission arrangement (11) and can be positioned and/or oriented via the at least one second output (7a to 7g), wherein the device (1) comprises a control actuator (17), which can be selectively and mechanically brought into an operative connection with the at least one first output (7a to 7g) and/or with the at least one second output (7a to 7g) for the purpose of orienting and/or positioning the one or more directing components (3, 4, 5, 6) coupled with the respective output (7a to 7g).

2. The device (1) as recited in claim 1, in which the control actuator (17) can be selectively and mechanically brought into an operative connection with the at least one first output (7a to 7g) and/or with the at least one second output (7a to 7g) via a central drive shaft (18) that is rotationally movably drivable via the control actuator (17).

3. The device (1) as recited in claim 2, in which the drive shaft (18) or the control actuator (17) together with the drive shaft (18) can be selectively brought into an operative connection with the at least one first output (7a to 7g) and/or with the at least one second output (7a to 7g) by a shift that is essentially aligned with the direction (V, V') of a longitudinal axis of the drive shaft (18).

4. The device (1) as recited in claim 3, in which the drive shaft (18) or the control actuator (17) together with the drive shaft (18) are coupled to a guide carriage (20) of a linear guiding means, which guide carriage (20) is movable in relation to a housing section (22).

5. The device (1) as recited in claim 4, in which the linear guiding means comprises a toothing (53) extending sectionwise along the drive shaft (18) and being shiftable together with the drive shaft (18), which toothing (53) is designed to be non-rotational and is in engagement with one or more, preferably however with all of the outputs (7a to 7g) that are not mechanically brought into an operative connection with the control actuator (17).

6. The device (1) as recited in claim 3, 4, or 5, in which the shift of the drive shaft (18) or the shift of the control actuator (17) together with the drive shaft (18) is carried out by means of a further actuator (28).

7. The device (1) as recited in claim 6, in which the further actuator (28) is stationarily connected to a housing section (22) of the device (1).

8. The device (1) as recited in one or more of the previous claims 2 to 7, in which the at least one first output (7a to 7g) and/or the at least one second output (7a to 7g) each form a reception for the drive shaft (18), through which reception the drive shaft (18) enters or passes in the instance of an operative connection with the respective output (7a to 7g).

9. The device (1) as recited in claim 8, in which the reception of the at least one first output (7a to 7g) and the reception of the at least one second output (7a to 7g) are arranged in such a manner that they are aligned with each other.

10. The device as recited in one or more of the claims 2 to 9, in which the at least one first output (7a to 7g) and/or the at least one second output (7a to 7g) are rotationally movably drivable by the drive shaft (18) and each have an internal toothing (35), which, for the mechanical operative connection, can be brought into engagement with a corresponding counter- toothing (33) of the central drive shaft (18) and/or with a corresponding counter- toothing (33) of one or more input means (31) mounted on the drive shaft (18).

11. The device (1) as recited in claim 10, in which the drive shaft (18) forms a corresponding counter- toothing (33) at least in one first partial section and at least in one second partial section along its longitudinal axis, or in which at least two input means (31') are mounted in different positions on the drive shaft (18).

12. The device (1) as recited in one or more of the previous claims 2 to 11, in which, for the purpose of orienting and/or positioning the one or more directing components (3, 4, 5, 6) coupled to the respective output (7a to 7g), the at least one first output (7a to 7g) and the at least one second output (7a to 7g) are designed to be rotationally movable independently of each other and have a common rotational axis (R), which rotational axis (R) runs essentially in the longitudinal direction of the drive shaft (18).

13. The device (1) as recited in claim 12, in which at least two outputs (7a to 7g), preferably, however, all outputs (7a to 7g) of the device (1), are arranged adjacent to each other and, for independent rotational movement, are directly brought into a connection with their respectively adjacent output (7a to 7g) via one or more axial bearings (15).

14. The device (1) as recited in one or more of the previous claims 1 to 13, in which the control actuator (17) and/or the further actuator (18) take the form of servomotors and/or stepper motors.

15. The device (1) as recited in one or more of the claims 1 to 14, in which the at least one first output (7a to 7g) and/or the at least one second output (7a to 7g) is coupled with the one or more directing components (3, 4, 5, 6), respectively, via one or more flexible cable elements, and in particular via a Bowden cable (51), a cable pull (49), a chain (45), or the like.

16. The device (1) as recited in one or more of the claims 1 to 14, in which at least one third output (7a to 7g) and/or a plurality of further outputs (7a to 7g) are present, which are each coupled with one or more further directing components (3, 4, 5, 6) and with which the control actuator (17) can be mechanically brought into an operative connection for orienting and/or positioning the one or more directing components (3, 4, 5, 6) coupled with the respective output (7a to 7g).

17. The device (1) as recited in one or more of the claims 1 to 16, which device (1) is provided for orienting and/or positioning one or more adjustable directing components (3, 4, 5, 6) in a transport system (10) as a constituent part of a packaging facility for articles and/or one or more adjustable directing components (3, 4, 5, 6) in a transport system (10) as a constituent part of a filling facility for articles (8) designed as containers (9) with a liquid medium.

## Revendications

1. Dispositif (1) de positionnement et/ou d'orientation d'un ou de plusieurs composants directeurs (3, 4, 5, 6) réglables destinés à diriger et/ou à guider des articles (8) dans un système de transport (10), dans lequel un ou plusieurs des composants directeurs (3, 4, 5, 6) sont couplés à au moins un premier organe de sortie (7a à 7g) d'un ensemble d'engrenage (11) et peuvent être positionnés et/ou orientés par l'intermédiaire dudit au moins un premier organe de sortie (7a à 7g), **caractérisé par le fait qu'**un ou plusieurs autres composants directeurs (3, 4, 5, 6) sont couplés à au moins un deuxième organe de sortie (7a à 7g) de l'ensemble d'engrenage (11) et peuvent être positionnés et/ou orientés par l'intermédiaire dudit au moins un deuxième organe de sortie (7a à 7g), dans lequel ledit dispositif (1) comprend un actionneur de réglage (17) qui peut être mis mécaniquement et sélectivement en liaison active avec ledit au moins un premier organe de sortie (7a à 7g) et/ou avec ledit au moins un deuxième organe de sortie (7a à 7g) pour orienter et/ou positionner ledit un ou lesdits plusieurs composants directeurs (3, 4, 5, 6) couplés à l'organe de sortie (7a à 7g) respectif.

2. Dispositif (1) selon la revendication 1, dans lequel ledit actionneur de réglage (17) peut être mis mécaniquement et sélectivement en liaison active avec ledit au moins un premier organe de sortie (7a à 7g) et/ou avec ledit au moins un deuxième organe de sortie (7a à 7g) par l'intermédiaire d'un arbre d'entraînement (18) central et apte à être entraîné d'une manière mobile en rotation par l'actionneur de réglage (17).

3. Dispositif (1) selon la revendication 2, dans lequel ledit arbre d'entraînement (18) ou ledit actionneur de réglage (17) conjointement avec l'arbre d'entraînement (18) peut être mis sélectivement en liaison active avec ledit au moins un premier organe de sortie (7a à 7g) et/ou avec ledit au moins un deuxième organe de sortie (7a à 7g) par un déplacement qui est dirigé pour l'essentiel en direction (V, V') d'un axe longitudinal de l'arbre d'entraînement (18).

4. Dispositif (1) selon la revendication 3, dans lequel, pour leur déplacement, ledit arbre d'entraînement (18) ou ledit actionneur de réglage (17) conjointement avec l'arbre d'entraînement (18) sont couplés à un chariot de guidage (20) d'un guide linéaire, qui est déplaçable par rapport à une zone de carter (22).

5. Dispositif (1) selon la revendication 4, dans lequel ledit guide linéaire comprend une denture (53) qui s'étend par zones le long de l'arbre d'entraînement (18) et est déplaçable conjointement avec l'arbre d'entraînement (18) et qui est réalisée de manière non rotative et est en prise avec un ou plusieurs, mais de préférence avec l'ensemble des organes de sortie (7a à 7g) qui ne sont pas mécaniquement mis en liaison active avec l'actionneur de réglage (17).

6. Dispositif (1) selon la revendication 3, 4 ou 5, dans lequel le déplacement de l'arbre d'entraînement (18) ou le déplacement de l'actionneur de réglage (17) conjointement avec l'arbre d'entraînement (18) se fait au moyen d'un autre actionneur (28).

7. Dispositif (1) selon la revendication 6, dans lequel ledit autre actionneur (28) est disposé à poste fixe sur une zone de carter (22) du dispositif (1).

8. Dispositif (1) selon l'une ou plusieurs des revendications précédentes 2 à 7, dans lequel ledit au moins un premier organe de sortie (7a à 7g) et/ou ledit au moins un deuxième organe de sortie (7a à 7g) forment chacun un logement pour l'arbre d'entraînement (18), logement à travers lequel l'arbre d'entraînement (18) entre ou passe dans le cas d'une liaison active avec l'organe de sortie (7a à 7g) respectif.

9. Dispositif (1) selon la revendication 8, dans lequel le logement dudit au moins un premier organe de sortie (7a à 7g) et le logement dudit au moins un deuxième organe de sortie (7a à 7g) sont agencés de manière à être alignés.

10. Dispositif (1) selon l'une ou plusieurs des revendications 2 à 9, dans lequel ledit au moins un premier organe de sortie (7a à 7g) et/ou ledit au moins un deuxième organe de sortie (7a à 7g) sont entraînables de manière mobile en rotation par ledit arbre d'entraînement (18) et présentent chacun une denture intérieure (35) qui, pour une liaison active mécanique, peut être mise en prise avec une contre-denture (33) correspondante de l'arbre d'entraînement (18) central et/ou une contre-denture (33) correspondante d'un ou de plusieurs moyens d'entraînement (31) placés sur l'arbre d'entraînement (18).

11. Dispositif (1) selon la revendication 10, dans lequel l'arbre d'entraînement (18) forme, le long de son axe longitudinal, au moins dans une première zone partielle et au moins dans une deuxième zone partielle, une contre-denture (33) correspondante, ou dans lequel au moins deux moyens d'entraînement (31') sont placés sur l'arbre d'entraînement (18) sur des positions différentes.

12. Dispositif (1) selon l'une ou plusieurs des revendications 2 à 11, dans lequel ledit au moins un premier organe de sortie (7a à 7g) et ledit au moins un deuxième organe de sortie (7a à 7g), pour orienter et/ou positionner ledit un ou lesdits plusieurs composants directeurs (3, 4, 5, 6) couplés à l'organe de sortie (7a à 7g) respectif, sont réalisés de manière à être mobiles en rotation l'un indépendamment de l'autre et présentent un axe de rotation commun (R), lequel axe de rotation (R) s'étend pour l'essentiel dans la direction longitudinale de l'arbre d'entraînement (18).

13. Dispositif (1) selon la revendication 12, dans lequel au moins deux organes de sortie (7a à 7g), mais de préférence l'ensemble des organes de sortie (7a à 7g) du dispositif (1) sont disposés de manière à être voisins les uns des autres et sont mis en liaison directement via un ou plusieurs paliers axiaux (15) avec leur organe de sortie (7a à 7g) voisin respectif pour un mouvement de rotation indépendant.

14. Dispositif (1) selon l'une ou plusieurs des revendications précédentes 1 à 13, dans lequel ledit actionneur de réglage (17) et/ou ledit autre actionneur (18) sont réalisés en tant que servomoteurs et/ou en tant que moteurs pas à pas.

15. Dispositif (1) selon l'une ou plusieurs des revendications 1 à 14, dans lequel ledit au moins un premier organe de sortie (7a à 7g) et/ou ledit au moins un deuxième organe de sortie (7a à 7g) est couplé audit un ou auxdits plusieurs composants directeurs (3, 4, 5, 6) chacun via un ou plusieurs éléments de traction flexibles et en particulier via un câble Bowden (51), un câble de commande (49), une chaîne (45) ou similaire.

16. Dispositif (1) selon l'une ou plusieurs des revendications 1 à 14, dans lequel au moins un troisième organe de sortie (7a à 7g) et/ou plusieurs autres organes de sortie (7a à 7g) existent qui sont couplés chacun à un ou plusieurs autres composants directeurs (3, 4, 5, 6) et avec lesquels l'actionneur de réglage (17) peut être mis mécaniquement en liaison active pour orienter et/ou positionner ledit un ou lesdits plusieurs composants directeurs (3, 4, 5, 6) couplés à l'organe de sortie (7a à 7g) respectif.

17. Dispositif (1) selon l'une ou plusieurs des revendications 1 à 16, lequel dispositif (1) est prévu pour orienter et/ou positionner un ou plusieurs composants directeurs (3, 4, 5, 6) réglables dans un système de transport (10) en tant que partie constitutive d'un dispositif d'emballage pour articles et/ou un ou plusieurs composants directeurs (3, 4, 5, 6) réglables dans un système de transport (10) en tant que partie constitutive d'un dispositif de remplissage d'un milieu liquide pour des articles (8) réalisés comme récipients (9).
